# EUROPÄISCHE PATENTSCHRIFT

(11) **EP 2 081 052 B1**
(45) Veröffentlichungstag und Bekanntmachung des Hinweises auf die Patenterteilung: **15.01.2014**
(21) Anmeldenummer: 08105763.0
(22) Anmeldetag: 11.11.2008
(51) Int. Cl.: G01S 15/93

(54) **Detektionsvorrichtung eines Fahrzeugs und entsprechendes Detektionsverfahren**
Detection device for a vehicle and relevant detection procedure
Dispositif de détection d'un véhicule et procédé de détection correspondant

(30) Priorität: 16.01.2008 DE 102008004641
(43) Veröffentlichungstag der Anmeldung: 22.07.2009
(73) Patentinhaber: Robert Bosch GmbH, 70442 Stuttgart (DE)
(72) Erfinder: Klee, Ulrich, 71229 Leonberg (DE); Lee, Wei-Chia, 71229 Leonberg (DE)

(56) Entgegenhaltungen:
- DE-A1- 19 929 794
- DE-A1-102004 006 015
- DE-A1-102004 024 695
- DE-A1-102005 003 970
- DE-A1-102005 009 702
- DE-A1-102005 013 146
- DE-A1-102005 013 589
- DE-A1-102005 052 633
- DE-A1-102005 057 973

## Beschreibung

Die Erfindung betrifft eine Detektionsvorrichtung eines Fahrzeug mit den im Oberbegriff des Anspruchs 1 genannten Merkmalen einerseits und ein entsprechendes Detektionsverfahren mit den im Oberbegriff des Anspruchs 6 genannten Merkmalen andererseits.

### Stand der Technik

Eine Detektionsvorrichtung und ein entsprechendes Detektionsverfahren der eingangs genannten Art sind aus der Offenlegungsschrift DE 10 2004 006 015 A1 bekannt. Hierbei dient eine Vorrichtung zur Anpassung eines Schwellwertes einer Detektionseinrichtung, vorzugsweise in einem Ultraschallsystem zur Fahrzeug-Umfelddetektion. Neben einer Sende-/Empfangseinrichtung zum Senden eines Sende-Bursts mit einer vorbestimmten Pulswiederholrate und einer vorbestimmten Signalfrequenz und zum Empfangen eines Empfangssignals weist die Vorrichtung eine Signalaufbereitungseinrichtung zum Aufbereiten des Empfangssignals auf. Zudem dient die Detektionseinrichtung dazu, eine Empfangssignal-Magnitude als Störpegelprobe nach einer ersten vorbestimmten Zeitdauer ab einem Signal-Burst innerhalb einer vorbestimmten zweiten Zeitdauer aus dem Empfangssignal zu ermitteln. Zum Anpassen eines Schwellwertes der Detektionseinrichtung in Abhängigkeit von der detektierten Empfangssignal-Magnitude als Störpegelprobe weist die Vorrichtung ferner eine Steuereinrichtung auf. Gleiches gilt in entsprechender Weise für das in der vorgenannten Offenlegungsschrift beschriebene Verfahren zur Anpassung eines Schwellwertes einer Detektionseinrichtung.

Der Zweck der bekannten Vorrichtung und des beschriebenen Verfahren besteht allerdings darin, erweiterte Detektionsfunktionen auch in einem dynamischen Umfeld einsetzen zu können, in welchem sich ein akustisches Störniveau, beispielsweise durch ein vorbeifahrendes Zweitakt-Motorrad, Windgeräusche und/oder so genannten Mikrophonics, schnell ändern kann. Die Mikrophonics hängen von der Motorlast beziehungsweise von der Motordrehzahl oder auch von anderen Fahrzeugvibrationen ab.

Aus der DE 10 2005 013 146 A1 ist ein Ortungssystem mit Blindheitserkennung für ein Fahrzeug bekannt, bei dem zwei Sensoren eingesetzt werden, von denen einer bevorzugt als Radarsensor ausgebildet ist. Wird ein Objekt im Überlappungsbereich der beiden Sensoren nur von einem der Sensoren erfasst, ist dies ein Hinweis auf die Erblindung eines Sensors. Zur Blindheitserkennung des Radarsensors wird weiterhin mittels eines Strahlteilers ein Teil des Radarsignals auf die Fahrbahnoberfläche gelenkt, so dass verstärkt Radarechos von Fahrbahnunebenheiten empfangen werden. Ein Ausbleiben dieser Echos ist ein weiterer Hinweis auf eine Erblindung des Sensors.

Aus der DE 10 2005 057 973 A1 ist weiterhin ein Verfahren zur Überprüfung der Funktion eines Ultraschallsensors bekannt, bei dem durch den Sensor ein Messsignal mit erhöhter Amplitude ausgesandt wird, sodass ein vom Fahrbahngrund reflektiertes Echosignal empfangen wird, wenn der Sensor funktionstüchtig ist. Gleichzeitig wird für diesen Zeitraum die Empfindlichkeit des Ultraschallsensors erhöht. Auf diese Weise kann festgestellt werden, ob der Sensor überhaupt ein Signal ausgesendet hat. Die Anpassung der Empfindlichkeit betrifft dabei den gesamten Messbereich des Ultraschallsensors.

### Offenbarung der Erfindung

Die erfindungsgemäße Detektionsvorrichtung mit den im Anspruch 1 genannten Merkmalen bietet demgegenüber den Vorteil, dass die Betriebsbereitschaft und Funktionstüchtigkeit jedes einzelnen Funktionselements, insbesondere eines Sensors, überprüft werden kann. Dabei weist die Funktionseinheit zumindest ein erstes und ein weiteres Funktionselement auf, deren Signaleingänge einem Vergleich zur Feststellung eines assoziativen Signalaufkommens unterliegen, und bei Ausbleiben der Signale bei einem der Funktionselemente eine Konfiguration dessen Sende-/Empfangsbereichs auf einen zu erfassenden Fahrbahngrund derart erfolgt, dass das entsprechende Funktionselement bei Funktionstüchtigkeit zwangsläufig zum Empfang von Signal-Reflexionen eingestellt ist. Sofern Signal-Reflexionen respektive Echos des Fahrbahngrunds von dem konfigurierten Funktionselement weiterhin nicht detektiert werden, wird daraus geschlossen, dass das entsprechende Funktionselement überhaupt keine Ziele mehr erkennen oder erfassen kann und demzufolge der Status "funktionslos" beziehungsweise "blind" zugewiesen wird.

Mit dieser Konstellation ist es folglich möglich, funktionsuntüchtige Sensoren anhand eines Funktionstests zu erkennen. Insbesondere kann mit der vorliegenden Lösung zwischen Situationen unterschieden werden, in denen eine "Sensorblindheit" aufgetreten ist oder aber lediglich kein Objekt im Erfassungsbereich des Funktionselements existiert. Im Fehlerfall kann in der Folge eine automatische Selbstabschaltung der Detektionsvorrichtung oder auch eine Informationsausgabe an den Fahrzeugfahrer erfolgen. Der Fahrzeugfahrer kann dann zwischen verschiedenen Optionen auswählen; dazu zählen beispielsweise eine manuelle Reinigung, eine manuelle Abschaltung der Detektionsvorrichtung oder auch ein Besuch der nächstgelegenen Kundendienststelle. Gleiches gilt in analoger Weise für das Detektionsverfahren mit den Merkmalen des Anspruchs 6.

Vorteilhafte Weiterbildungen ergeben sich durch die Merkmale der abhängigen Ansprüche.

Erfindungsgemäß ist es vorgesehen, dass bei dem zu überprüfenden Funktionselement die Konfiguration lediglich eines Teilbereichs des Sende-/Empfangsbereichs erfolgt, so dass auch während eines Selbsttests Objekte, Hindernisse, Personen oder dergleichen im Umfeld des Fahrzeugs detektiert werden können. Mit anderen Worten bleibt die Detektionsfunktion der Detektionsvorrichtung selbst während eines Überprüfungszyklus erhalten.

Erfindungsgemäß ist es vorgesehen, dass die Konfiguration des Sende-/Empfangsbereichs anhand einer Amplitudenanpassung erfolgt. Hierbei wird ein Amplitudenschwellwert des zu testenden Funktionselements, insbesondere Sensor, so umkonfiguriert, dass dieses Bodenechos nicht mehr ausblendet.

Gemäß einer bevorzugten Ausgestaltung der Erfindung ist es vorgesehen, dass mangels eines Signalempfangs die Generierung eines Fehlersignals erfolgt. Anhand des Fehlersignals kann beispielsweise eine erneute Überprüfung des betroffenen Funktionselements angestoßen, die Abschaltung der Detektionseinrichtung veranlasst oder auch eine Information an den Fahrzeuglenker ausgegeben werden, wonach einem erprobten Schema Handlungen ausgeführt werden können.

Gemäß einer weiteren bevorzugten Ausgestaltung der Erfindung ist es vorgesehen, dass die Ausführung der Funktionen mittels eines Steuergerätes, insbesondere Microcontrollers, erfolgt. Das Steuergerät übernimmt hierbei eine Steuerung und/oder Regelung durchzuführender Prozesse, wozu auch der Selbsttest der Funktionselemente zählt. Das Steuergerät kann entweder als separate Komponente zum Einsatz kommen oder als integraler Bestandteil eines bereits vorhandenen Steuergeräts ausgeführt sein.

Die Vorteile der abhängigen Vorrichtungsansprüche 2 bis 5 gelten in analoger Weise auch für die Merkmale der abhängigen Verfahrensansprüche.

### Kurze Beschreibung der Zeichnungen

Die Erfindung sowie vorteilhafte Ausgestaltungen gemäß den Merkmalen der weiteren Ansprüche werden im Folgenden anhand der in den Zeichnungen dargestellten Ausführungsbeispiele näher erläutert, ohne dass insoweit eine Beschränkung der Erfindung erfolgt; diese umfasst vielmehr alle Abwandlungen, Änderungen und Äquivalente, die im Rahmen der Ansprüche möglich sind. Es zeigen:
- Figur 1: ein schematisiertes Fahrzeug in einer Schnittdarstellung mit mehreren Funktionselementen, insbesondere Sensoren, als Teil einer Detektionsvorrichtung;
- Figur 2: ein erstes Amplituden-Messdistanz-Diagramm bei einer Standard-Einstellung einer Amplitudenschwelle des zu überprüfenden Funktionselements;
- Figur 3: ein weiteres Amplituden-Messdistanz-Diagramm bei einer Einstellung der Amplitudenschwelle zur Erfassung von Bodenechos; und
- Figur 4: ein letztes Amplituden-Messdistanz-Diagramm bei einer Kombinations-Einstellung der Amplitudenschwelle zur Detektion von Bodenechos und zur Erfassung von Umfeldobjekten.

### Ausführungsform(en) der Erfindung

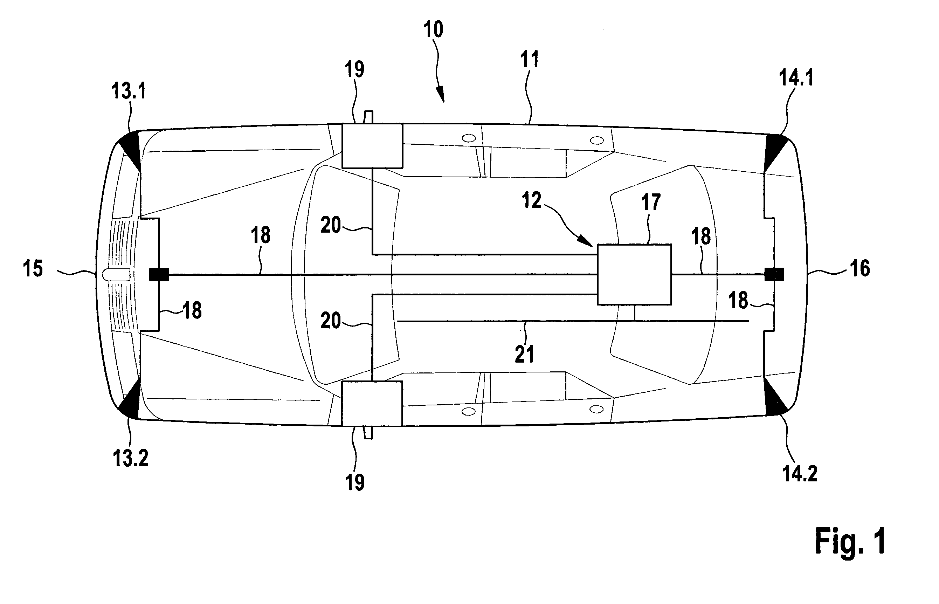

In Figur 1 ist eine Detektionsvorrichtung 10 eines Fahrzeugs 11 mit einer Funktionseinheit 12 zum Senden und Empfangen von Signalen gezeigt. Die Funktionseinheit 12 weist im vorliegenden Ausführungsbeispiel vier Funktionselemente 13.1;13.2;14.1;14.2 auf. Die Funktionselemente 13.1;13.2;14.1;14.2 sind als Sensoren, insbesondere als Ultraschall-Sensoren, ausgebildet. Dabei sind zwei Funktionselemente 13.1;13.2 an einem Front-Stoßfänger 15 des Fahrzeugs 11 und die beiden anderen Funktionselemente 14.1;14.2 an einem Heck-Stoßfänger 16 des Fahrzeugs 11 angeordnet. Die Anordnung jedes einzelnen Funktionselements 13.1;13.2;14.1;14.2 an den Stoßfängern 15;16 ist dabei derart ausgeführt, dass ein möglichst großer Erfassungsbereich abgedeckt werden kann.

Den Ultraschall-Sensoren 13.1;13.2;14.1;14.2 liegt ein Funktionsprinzip zu Grunde, bei dem sich Schall im Raum als Longitudinalwelle ausbreitet, wobei die Umgebungsluft als Medium für die Schallwelle dient. In einem derart inhomogenen Medium hängt die Ausbreitungsgeschwindigkeit von der Dichte und somit vom Ort ab. An Stellen mit einer Dichteänderung wird die Schallwelle zusätzlich teilweise reflektiert. Bei einer einachsigen Betrachtung dieser Vorgänge wird durch jede Dichteänderung ein Echo zur Ultraschallquelle reflektiert, welches als Signal wieder auffangbar und auswertbar ist. Diesen Effekt machen sich die Ultraschall-Sensoren 13.1;13.2;14.1;14.2 zu nutze. Über eine angeregte Membran wird ein, zum Beispiel durch einen piezoelektrischen Antrieb, erzeugtes Ultraschall-Signal auf eine beliebig geformte Grenzfläche zwischen zwei Medien ausgesendet und anschließend wieder aufgefangen. Die Zeitdifferenz zwischen aussenden und empfangen des Signals gibt bei bekannter Mediumsdichte Aufschluss über die Distanz zwischen der Grenzfläche und dem jeweiligen Sensor 13.1;13.2;14.1; 14.2. Dadurch ist eine Längenmessung entlang der Schallausbreitung möglich. Hierbei sind die Ultraschall-Sensor 13.1;13.2;14.1;14.2 als Sender und zugleich als Empfänger ausgebildet und weisen somit sensorische beziehungsweise aktorische Eigenschaften auf.

Die Funktionseinheit 12 der Detektionsvorrichtung 10 umfasst neben den Funktionselementen 13.1;13.2;14.1;14.2, insbesondere SVA-Sensoren (Side View Assist - Sensors), auch ein SVA-Steuergerät 17 (Side View Assist - Engine Control Unit), welches mit den Sensoren über Steuer- und/oder Datenleitungen 18 in einer Daten austauschenden Wirkverbindung steht. Auch eine so genannte Mensch-Maschine-Schnittstelle 19 (Human-Maschine-Interface) wird von dem Steuergerät 17 über entsprechende Leitungen 20 in einen Steuer-/Regelprozess mit einbezogen. Das Steuergerät 17 empfängt und sendet darüber hinaus Informationen und Daten mittels eines Bussystems 21, insbesondere so genannter Low-Speed-CAN-Bus, zum Beispiel an ein übergeordnetes Steuergerät des Fahrzeugs 11. Die vorab erwähnte SVA-Technologie steht hierbei für ein Assistenzsystem, das den Fahrzeugfahrer beim Ein- und Ausparken, bei Fahrzeug-Manövern sowie bei beengten Verkehrssituationen unterstützt. Insbesondere dient die Detektionsvorrichtung 10 dazu, den so genannten "Toten Winkel" zu überwachen.

Der CAN-Bus (Controller Area Network) gehört zu den Feldbussen. Es handelt sich dabei um ein asynchrones, serielles Bussystem, das für die Vernetzung von Steuergeräten in Automobilen eingesetzt wird. Der CAN-Bus arbeitet nach dem CSMA/CR-Verfahren (Carrier Sense Multiple Access / Collision Resolution). Dabei werden Kollisionen beim Buszugriff durch eine Arbitrierung oder Bit-Arbitrierung vermieden. Die Daten sind NRZ-L-kodiert (Non Return to Zero). Des Weiteren kommt zur Datensicherung die zyklische Redundanzprüfung (CRC) zum Einsatz. Zur fortlaufenden Synchronisierung der Busteilnehmer wird Bitstopfen (Bit Stuffing) verwendet. Der Bus 21 ist entweder mit Kupferleitungen oder über Glasfaser ausgeführt. Der CAN-Bus arbeitet nach dem so genannten Multi-Master-Prinzip, wobei mehrere gleichberechtigte Steuergeräte, also Busteilnehmer, durch eine topologische Anordnung miteinander verbunden sind. Die Übertragung der Daten erfolgt derart, dass ein Daten-Bit, je nach Zustand, entweder dominant oder rezessiv auf den Busleitungen wirkt. Ein dominantes Daten-Bit überschreibt dabei ein rezessives Daten-Bit. In der CAN-Bus-Architektur wird zwischen einem Highspeed- und einem Lowspeed-Bus unterschieden. Bei einem High-Speed-Bus beträgt die maximale Datenübertragungsrate 1 Mbit/s, während bei einem Low-Speed-Bus lediglich eine Datenübertragungsrate von 125 kbit/s erreichbar ist.

Der "Tote Winkel" entsteht aus Sicht des Fahrzeugfahrers bei einem planen Rückspiegel links hinten und rechts hinten neben dem Fahrzeug 11. Sofern das Fahrzeug 11 durch einen anderen Verkehrsteilnehmer überholt wird, kann der Fahrer des überholten Fahrzeugs 11 den Verkehrsteilnehmer für eine gewisse Zeit nicht wahrnehmen, es sei denn, dass er über seine linke Schulter blickt. Der Schulterblick ist zwar in der deutschen Straßenverkehrsordnung vorgeschrieben, dennoch unterbleibt dieses Umsichtsverhalten sehr häufig. Insbesondere bei einem Spurwechsel, bei einem Überholvorgang, beim Abbiegen oder auch beim Ein- und Anfahren kann für eine verbesserte Erfassung des Umfeldes gesorgt werden. Technische Unterstützung des Fahrers bietet in diesem Zusammenhang die beschriebene Detektionsvorrichtung 10, welches die Bereiche der "Toten Winkel" linker und rechter Hand des Fahrzeugs 11 überwacht. Befindet sich ein weiteres Fahrzeug in diesen Bereichen, warnt das System den Fahrer durch ein optisches und/oder akustisches Signal. Allerdings werden dann entgegenkommende Fahrzeuge nicht angezeigt, wenn sich das weitere Fahrzeug in gleicher Fahrtrichtung wie das Fahrzeug 11 bewegt. Prinzipiell wird vor einem sich dem Fahrzeug 11 nähernden Objekt gewarnt. Optional kann die Größe des Überwachungs- oder auch Beobachtungsbereichs in Abhängigkeit von der Eigengeschwindigkeit des Fahrzeugs 11 eingestellt werden. Dabei erfolgt eine Anzeige und/oder Warnung vor sich relativ zu dem Fahrzeug 11 nur geringfügig bewegten Objekten auf der Basis einer sensorischen Umfelderfassung, zum Beispiel mittels der Ultraschall-Sensoren 13.1;13.2;14.1;14.2 bei einer Vorwärtsfahrt des Fahrzeugs 11 ab einer bestimmten Geschwindigkeit.

Um eine derartige Umfelddetektion zu ermöglichen, ist es notwendig, Objekte mit den Funktionselementen 13.1;13.2;14.1;14.2 respektive Sensoren zu erfassen und mit Hilfe von Algorithmen den Abstand zwischen dem jeweiligen Objekt zu dem Fahrzeug 11 fehlerfrei zu ermitteln. Hierzu werden beispielsweise Ultraschall-Sensoren (USS) mit einer hohen Reichweite und mit einer hohen Empfindlichkeit eingesetzt, damit von dem sich nähernden Objekt oder Fahrzeug kommenden Signal-Reflexionen beziehungsweise Signal-Echos gemessen werden können. Die Sensoren 13.1;13.2;14.1;14.2 sind dabei so konfiguriert, dass während der Fahrt auftretende und durch den Fahrbahngrund bedingte Echos durch einen gesetzten Amplituden-Schwellwert des jeweiligen Sensors ausgeblendet werden. Werden die Funktionselemente 13.1;13.2;14.1;14.2 durch Schmutz, Matsch, Schnee, Eis und dergleichen zugedeckt, können die Sensoren die zu erfassenden und von Objekten reflektierten Echos nicht mehr empfangen, so dass hierbei von der so genannten "Sensorblindheit" gesprochen wird.

Abhilfe wird in dem vorgenannten Fall dadurch geschaffen, dass gegebene Signaleingänge der Funktionselemente 13.1;13.2;14.1;14.2 einem Vergleich zur Feststellung eines assoziativen Signalaufkommens unterzogen werden. Mit anderen Worten wird ein laufender Vergleich der von den messenden Sensoren 13.1;13.2;14.1;14.2 gelieferten Informationen durchgeführt, wobei insbesondere eine Gegenüberstellung der Informationen der vorderen Sensoren mit den Informationen der hinteren Sensoren im Fokus steht. Liefert hierbei einer der Sensoren 13.1;13.2;14.1;14.2 über einen vorgebbaren Zeitraum im Unterschied zu den anderen Sensoren 13.1;13.2;14.1;14.2 keine Abstandsmessdaten mehr, wird nur ein bestimmter Sende-/Empfangsbereich des entsprechenden Sensors so eingestellt, dass Reflexionen von dem Fahrbahngrund detektiert werden müssen. Beim Ausbleiben der Signale bei einem der Funktionselemente 13.1;13.2;14.1; 14.2 erfolgt folglich eine Konfiguration des Sende-/Empfangsbereichs auf einen zu erfassenden Fahrbahngrund derart, dass das entsprechende Funktionselement 13.1;13.2;14.1;14.2 bei Funktionstüchtigkeit zwangsläufig zum Empfang von Signal-Reflexionen eingestellt ist. Mit dieser Konstellation ist es folglich möglich, funktionsuntüchtige Sensoren anhand eines Funktionstests zu erkennen. Insbesondere kann mit der vorliegenden Lösung zwischen Situationen unterschieden werden, in denen eine Sensorblindheit aufgetreten oder aber lediglich kein Objekt im Erfassungsbereich des jeweiligen Funktionselements 13.1;13.2; 14.1;14.2 vorhanden ist.

Die Detektionsvorrichtung 10 und ein damit einhergehendes System, insbesondere Fahrerassistenzsystem, zur Umfeld-Überwachung ist dafür ausgelegt, den Fahrzeugfahrer zu warnen, sobald sich ein Objekt in einem der an dem Fahrzeug gegebenen "Toten Winkel" befindet. Es ist jedoch nicht gewünscht, dass der Fahrer ausnahmslos und in jedem Fall über ein sich näherndes Objekt informiert wird, da dies zu einer Fülle an Warnungen und damit letztlich zu einer Reizüberflutung führen würde. Beispielsweise würde das System bei einer Fahrzeugfahrt entlang einer Leitplanke eine Dauerwarnung verursachen, weswegen eine Beschränkung auf relevante Objekte erforderlich ist. Eine Filterung nicht zu erfassender Objekte erfolgt dabei unter Einsatz der Funktionselement 13.1;13.2; 14.1;14.2 beziehungsweise Sensoren. Wird der an dem Fahrzeug hinten rechts angeordnete Sensor 14.1 mit einem Erfassungswinkel von 45° bezogen auf die Längsachse des Fahrzeugs betrachtet, können Objekte in dem auf der rechten Fahrzeugseite befindlichen "Toten Winkel" erkannt werden. Der auf der gleichen Fahrzeugseite angeordnete vordere Sensor 13.1 plausibilisiert über eine vorgebbare Zeit und eine zurückgelegte Fahrdistanz Objekte, wie zum Beispiel Leitplanken und/oder entgegenkommende Fahrzeuge, in Kooperation mit der Funktionseinheit 12 heraus, so dass eine diesbezügliche Warnung unterdrückt wird.

Damit die Überwachung der "Toten Winkel" zuverlässig funktioniert, ist folglich die volle Funktionsfähigkeit der vorderen Sensoren 13.1;13.2 sowie der hinteren Sensoren 14.1;14.2 zu gewährleisten. Sind ein oder mehrere Sensoren nicht mehr funktionsfähig, beispielsweise durch Vereisung, Schneeabdeckung, Steinschlag oder dergleichen, muss dieser Zustand von dem System erkannt werden, um eine angemessene Reaktion beziehungsweise Maßnahme einleiten zu können. Als Maßnahme kann beispielsweise eine Information des Fahrers, eine Abschaltung des Systems, etc. eingeleitet werden. Zur Erkennung einer Sensorfehlfunktion kann dazu eine Korrelation von Objektmustern in den vorderen Sensoren 13.1;13.2 und den hinteren Sensoren 14.1;14.2 genutzt werden.

Ein an dem Fahrzeug 11 vorbeifahrendes weiteres Fahrzeug erzeugt hierbei mit hoher Wahrscheinlichkeit ein klassifizierbares Muster. Bei einem ersten Muster, wonach Gegenverkehr und entsprechende Kraftfahrzeuge von dem Fahrzeug 11 überholt werden, erfolgt zunächst eine Detektion dieser Verkehrsteilnehmer in dem vorderen linken Sensor 13.2 und anschließend direkt in dem hinteren linken Sensor 14.2. Verkehrsteilnehmer, die das Fahrzeug 11 überholen, werden hingegen zunächst in dem hinteren linken Sensor 14.2 und anschließend in dem vorderen linken Sensor 14.1 detektiert. In deutlich selteneren Fällen kann es auch vorkommen, dass sich ein anderes Fahrzeug in etwa gleichem Abstand und bei annähernd gleicher Geschwindigkeit zu dem Fahrzeug 11 bewegt, bevor es zurückfällt oder beschleunigt wird. Nur in diesen Fällen wird das Objekt ausschließlich in zumindest einem der vorderen Sensoren 13.1;13.2 oder ausschließlich in zumindest einem der hinteren Sensoren 14.1;14.2 detektiert.

Zur Funktionsüberwachung der Sensoren 13.1;13.2;14.1;14.2 kann eine hohe Wahrscheinlichkeit der beiden erstgenannten Fälle genutzt werden. Solange Objekte in den vorderen Sensoren 13.1;13.2 oder den hinteren Sensoren 14.1;14.2 detektiert werden, kann von der Funktionsfähigkeit aller Sensoren ausgegangen werden. Wird ein Objekt jedoch wiederholt nur in dem jeweiligen vorderen Sensor 13.1;13.2 oder nur in dem jeweiligen hinteren Sensor 14.1;14.2 erfasst, ohne dass in dem korrespondierenden Sensor ein Objekt detektiert wird, steigt die Wahrscheinlichkeit für eine Sensorfehlfunktion deutlich an.

Einen Einfluss auf die Wahrscheinlichkeit einer Sensorfehlfunktion hat neben der Korrelation der Front- und Hecksensoren 13.1;13.2;14.1;14.2 auch die Geschwindigkeit des Fahrzeugs 11. Bei einer sehr konstanten Geschwindigkeit erhöht sich die Wahrscheinlichkeit für ein gleichmäßig mitfahrendes weiteres Fahrzeug. Eine sehr variable Geschwindigkeit des Fahrzeugs 11 verringert wiederum besagte Wahrscheinlichkeit. Eine sehr niedrige Geschwindigkeit des Fahrzeugs 11 deutet auf Stadtverkehr hin. Hier ist die Wahrscheinlichkeit, dass nur in den Frontsensoren 13.1;13.2 oder nur in den Hecksensoren 14.1;14.2 ein Objekt auftaucht, sehr gering, da sich stehende Objekte und andere Verkehrsteilnehmer mit einer gewissen Beständigkeit vor und hinter dem Fahrzeug 11 befinden. Eine sehr hohe Geschwindigkeit deutet auf eine Autobahnfahrt hin. Auch hierbei ist die Wahrscheinlichkeit dafür, dass ein Objekt nur vor oder nur hinter dem Fahrzeug 11 vorkommt, eher gering. Da ab einer gewissen Geschwindigkeit in der Regel Objekte, wie zum Beispiel Lastkraftwagen, überholt werden beziehungsweise das Fahrzeug 11 selbst von anderen Verkehrsteilnehmern überholt wird, sollten bei einer korrekten Funktion aller Sensoren 13.1;13.2;14.1;14.2 regelmäßig Echos, insbesondere Ultraschall-Echos, empfangen werden.

Übersteigt die Wahrscheinlichkeit für eine Sensorfehlfunktion einen gewissen Wert, kann eine Amplitudenschwelle 22 des betroffenen respektive vermeintlich "blinden" Sensors so umkonfiguriert werden, dass sie nun keine Bodenechos mehr ausblenden kann. In einem solchen Fall liefert ein funktionierender Sensor ein Echo des Bodens zurück. Ein "blinder" Sensor wird jedoch weiterhin keine Echos detektieren, womit die Fehlfunktion bestätigt wird und entsprechende Maßnahmen eingeleitet werden können.

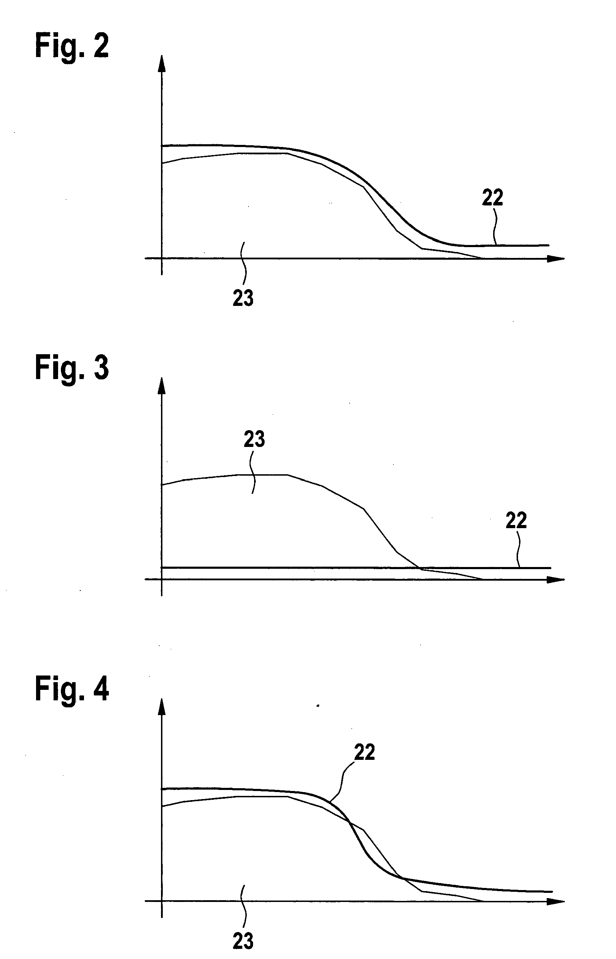

Im einfachsten Fall wird die Amplitudenschwelle 22 gemäß Figur 3 so eingestellt, dass keinerlei Bodenechos mehr gefiltert werden können. Dies führt jedoch dazu, dass der entsprechende Sensor während der Testphase keine anderen Objekte außer dem Fahrbahngrund mehr detektieren kann. Eine optimierte Verfahrensweise kann dadurch erzielt werden, dass nur in einem kleinen Messbereich des Sensors - bevorzugt im Messbereich für größere Distanzen - die Amplitudenschwelle 22 gemäß Figur 4 abgesenkt wird. Dadurch können relevante Objekte im Nahbereich weiterhin detektiert werden, während die Bodenechos aus dem Fernbereich des Sensors zur Blindheitsdetektion nutzbar sind. Die Detektionsreichweite des jeweiligen Sensors wird dadurch während der Blindheitsdetektion zwar eingeschränkt, jedoch im Vergleich zu der erstgenannten Ausführung nicht vollständig unterdrückt.

Gemäß Figur 2 ist die Standardeinstellung der Amplitudenschwelle 22 in einem Diagramm gezeigt, welche oberhalb eines Bodenechos 23 angesiedelt ist. Während auf der Ordinate die Amplitudengröße abgebildet ist, wird auf der Abszisse die Messdistanz aufgetragen. In der Figur 3 ist die Amplitudenschwelle 22 des entsprechenden Sensors deutlich abgesenkt, um das Bodenecho 23 detektieren zu können. Die Figur 4 zeigt eine verbesserte Einstellung der Amplitudenschwelle 22 zur Detektion des Bodenechos 23 bei gleichzeitiger Erfassung von Objekten im Detektionsbereich des Sensors. Die jeweilige vertikale Achse und die jeweilige horizontale Achse der beiden Diagramme gemäß den Figuren 3 und 4 entsprechen den Achsen nach der Figur 2.

Zusammenfassend ist die Detektionsvorrichtung 10 des Fahrzeugs 11 mit der Funktionseinheit 12 zum Senden und Empfangen von Signalen gegeben, welche zumindest zwei Funktionselemente 13.1;13.2;14.1;14.2 aufweist. Die von den messenden Funktionselementen 13.1;13.2;14.1;14.2 erfassten Signale werden einem kontinuierlichen, zyklischen oder auch stichprobenartigen Vergleich unterzogen. Bei Aussetzen der Signale eines der Funktionselemente erfolgt eine Einstellung respektive Parametrierung dessen Sende-/Empfangsbereichs auf einen zu erfassenden Fahrbahngrund derart, dass das relevante Funktionselement im Falle der Funktionstüchtigkeit zwangsläufig zum Empfang von Signal-Reflexionen via Fahrbahngrund eingestellt ist. Damit ist eine Blindheitserkennung durch die Korrelation der Signale aus den messenden Sensoren gegeben. Weiterhin dient ein entsprechendes Verfahren zur Überprüfung der Ultraschall-Sensoren auf ihre Funktionsfähigkeit während des Fahrzeugbetriebs.

## Patentansprüche

1. Detektionsvorrichtung (10) eines Fahrzeugs (11) mit einer Funktionseinheit (12) zum Senden und Empfangen von Signalen, wobei die Funktionseinheit (12) zumindest einen ersten und einen weiteren Sensor (13.1;13.2;14.1;14.2) aufweist, deren jeweilige Signaleingänge einem Vergleich zur Feststellung eines assoziativen Signalaufkommens unterliegen, und bei Ausbleiben der Signale bei einem der Sensoren (13.1;13.2;14.1;14.2) eine Konfiguration dessen Sende-/Empfangsbereich auf einen zu erfassenden Fahrbahngrund derart erfolgt, dass der entsprechende Sensor (13.1;13.2; 14.1;14.2) bei Funktionstüchtigkeit zwangsläufig zum Empfang von Boden-Signal-Reflexionen eingestellt ist, dass bei diesem (13.1;13.2;14.1;14.2) die Konfiguration lediglich eines Teilbereichs des Sende-/Empfangsbereichs erfolgt, **dadurch gekennzeichnet dass** die Konfiguration des Sende-/Empfangsbereichs anhand einer Amplitudenanpassung des Signals erfolgt, indem die Amplitudenschwelle (22) des Sensors nur im Messbereich für größere Distanzen abgesenkt wird, derart, dass relevante Objekte im Nahbereich weiterhin detektiert werden, während Signal-Reflexionen des Fahrbahngrunds im Bereich größerer Distanzen erfasst werden.

2. Detektionsvorrichtung (10) nach Anspruch 1, **dadurch gekennzeichnet, dass** mangels eines Signalempfangs die Generierung eines Fehlersignals erfolgt.

3. Detektionsvorrichtung (10) nach einem der vorhergehenden Ansprüche, **dadurch gekennzeichnet, dass** die Ausführung der Funktionen mittels eines Steuergerätes (17), insbesondere Microcontrollers, erfolgt.

4. Detektionsverfahren, bei dem eine Detektionsvorrichtung (10) eines Fahrzeugs (11) mit einer Funktionseinheit (12) zum Senden und Empfangen von Signalen vorgesehen ist, wobei die Funktionseinheit (12) zumindest einen ersten und einen weiteren Sensor (13.1;13.2;14.1; 14.2) aufweist, deren jeweilige Signaleingänge zur Feststellung eines assoziativen Signalaufkommens verglichen werden, und bei Ausbleiben der Signale bei einem der Sensoren (13.1;13.2;14.1;14.2) dessen Sende-/Empfangsbereich auf einen zu erfassenden Fahrbahngrund derart konfiguriert wird, dass der entsprechende Sensor (13.1;13.2;14.1;14.2) bei Funktionstüchtigkeit zwangsläufig zum Empfang von Boden-Signal-Reflexionen eingestellt wird, dass bei diesem Sensor (13.1;13.2;14.1;14.2) lediglich ein Teilbereich des Sende-/Empfangsbereichs konfiguriert wird, **dadurch gekennzeichnet dass** der Teilbereich des Sende-/Empfangsbereichs anhand einer Amplitudenanpassung des Signals konfiguriert wird, indem die Amplitudenschwelle (22) des Sensors nur im Messbereich für größere Distanzen abgesenkt wird, derart, dass relevante Objekte im Nahbereich weiterhin detektiert werden, während Signal-Reflexionen des Fahrbahngrunds im Bereich größerer Distanzen erfasst werden.

5. Detektionsverfahren nach Anspruch 4, **dadurch gekennzeichnet, dass** mangels eines Signalempfangs ein Fehlersignal generiert wird.

6. Detektionsverfahren nach einem der Ansprüche 4 oder 5, **dadurch gekennzeichnet, dass** die Funktionen mittels eines Steuergerätes (17), insbesondere Microcontrollers, durchgeführt werden.

## Claims

1. Detection apparatus (10) of a vehicle (11) having a functional unit (12) for transmitting and receiving signals, wherein the functional unit (12) has at least a first and a further sensor (13.1; 13.2; 14.1; 14.2), the respective signal inputs of which are subject to a comparison in order to establish an associative signal occurrence, and absence of the signals for one of the sensors (13.1; 13.2; 14.1; 14.2) prompts the transmission/reception region thereof to be configured for a roadway base to be sensed, such that the relevant sensor (13.1; 13.2; 14.1; 14.2), if functioning properly, is inevitably set to receive base signal reflections, and that for this sensor (13.1; 13.2; 14.1; 14.2) only a subregion of the transmission/reception region is configured, **characterized in that** the transmission/reception region is configured by means of amplitude matching of the signal by virtue of the amplitude threshold (22) of the sensor being lowered only in the measurement region for relatively great distances such that relevant objects in the close region continue to be detected, while signal reflections from the roadway base are sensed in the region of relatively great distances.

2. Detection apparatus (10) according to Claim 1, **characterized in that** in the absence of signal reception an error signal is generated.

3. Detection apparatus (10) according to either of the preceding claims, **characterized in that** the functions are performed by means of a controller (17), particularly a microcontroller.

4. Detection method, in which a detection apparatus (10) of a vehicle (11) having a functional unit (12) for transmitting and receiving signals is provided, wherein the functional unit (12) has at least a first and a further sensor (13.1; 13.2; 14.1; 14.2), the respective signal inputs of which are compared in order to establish an associative signal occurrence, and absence of the signals for one of the sensors (13.1; 13.2; 14.1; 14.2) prompts the transmission/reception region thereof to be configured for a roadway base to be sensed, such that the relevant sensor (13.1; 13.2; 14.1; 14.2), if functioning properly, is inevitably set to receive base signal reflections, and that for this sensor (13.1; 13.2; 14.1; 14.2) only a subregion of the transmission/reception region is configured, **characterized in that** the subregion of the transmission/reception region is configured by means of amplitude matching of the signal by virtue of the amplitude threshold (22) of the sensor being lowered only in the measurement region for relatively great distances such that relevant objects in the close region continue to be detected, while signal reflections from the roadway base are sensed in the region of relatively great distances.

5. Detection method according to Claim 4, **characterized in that** in the absence of signal reception an error signal is generated.

6. Detection method according to either of Claims 4 and 5, **characterized in that** the functions are performed by means of a controller (17), particularly a microcontroller.

## Revendications

1. Dispositif de détection (10) pour un véhicule (11), présentant une unité fonctionnelle (12) qui émet et reçoit des signaux, l'unité fonctionnelle (12) présentant au moins un premier et un autre capteur (13.1, 13.2; 14.1, 14.2) dont les entrées de signaux subissent une comparaison permettant de déterminer l'apparition de signaux associés et dans lequel, en l'absence de signaux sur un des capteurs (13.1, 13.2; 14.1, 14.2), une configuration de sa partie d'émission/réception sur le sol de la chaussée à saisir a lieu de telle sorte que le capteur (13.1, 13.2; 14.1, 14.2) concerné soit, lorsqu'il fonctionne correctement, réglé obligatoirement sur la réception de réflexion de signaux du sol, de telle sorte que pour cet capteur (13.1, 13.2; 14.1, 14.2), la configuration n'ait lieu que sur une partie de la zone d'émission/réception,
**caractérisé en ce que**
la configuration de la zone d'émission/réception s'effectue à l'aide d'une adaptation de l'amplitude du signal par le fait que le seuil d'amplitude (22) du capteur est abaissé uniquement dans la plage de mesure des grandes distances de telle sorte que des objets pertinents soient en outre détectés dans la zone proche tandis que les réflexions du sol de la chaussée sont détectées dans la plage des plus grandes distances.

2. Dispositif de détection (10) selon la revendication 1, **caractérisé en ce qu'**un signal d'erreur est délivré en cas d'absence de réception des signaux.

3. Dispositif de détection (10) selon l'une des revendications précédentes, **caractérisé en ce que** l'exécution des fonctions s'effectue au moyen d'un appareil de commande (17) et en particulier d'un microcontrôleur.

4. Procédé de détection, dans lequel un dispositif de détection (10) pour véhicule (11), doté d'une unité fonctionnelle (12) qui émet et reçoit des signaux est prévue, l'unité fonctionnelle (12) présentant au moins un premier et un autre capteur (13.1, 13.2; 14.1, 14.2) dont les entrées de signaux subissent une comparaison permettant de déterminer l'apparition de signaux associés et dans lequel, en l'absence de signaux sur un des capteurs (13.1, 13.2; 14.1, 14.2), une configuration de sa partie d'émission/réception sur le sol de la chaussée à saisir a lieu de telle sorte que le capteur (13.1, 13.2; 14.1, 14.2) concerné soit, lorsqu'il fonctionne correctement, réglé obligatoirement sur la réception de réflexion de signaux du sol, de telle sorte que pour cet capteur (13.1, 13.2; 14.1, 14.2), la configuration n'ait lieu que sur une partie de la zone d'émission/réception, **caractérisé en ce que**
la configuration de la zone d'émission/réception s'effectue à l'aide d'une adaptation de l'amplitude du signal par le fait que le seuil d'amplitude (22) du capteur est abaissé uniquement dans la plage de mesure des grandes distances de telle sorte que des objets pertinents soient en outre détectés dans la zone proche tandis que les réflexions du sol de la chaussée sont détectées dans la plage des plus grandes distances.

5. Procédé de détection selon la revendication 4, **caractérisé en ce qu'**un signal d'erreur est délivré en cas d'absence de réception des signaux.

6. Procédé de détection selon l'une des revendications 4 ou 5, **caractérisé en ce que** l'exécution des fonctions s'effectue au moyen d'un appareil de commande (17) et en particulier d'un microcontrôleur.
